**Europäisches Patentamt**

**European Patent Office**

**Office européen des brevets**

(19)

(11) Veröffentlichungsnummer: **0 266 527 B1**

# EUROPÄISCHE PATENTSCHRIFT

(12)

(45) Veröffentlichungstag der Patentschrift: **06.03.91**

(51) Int. Cl.⁵: **A01C 7/20, A01C 5/06**

(21) Anmeldenummer: **87113598.4**

(22) Anmeldetag: **17.09.87**

(54) **Sämaschine.**

(30) Priorität: **03.10.86 DE 3633685**

(43) Veröffentlichungstag der Anmeldung:
**11.05.88 Patentblatt 88/19**

(45) Bekanntmachung des Hinweises auf die
Patenterteilung:
**06.03.91 Patentblatt 91/10**

(84) Benannte Vertragsstaaten:
**AT DE FR GB IT**

(56) Entgegenhaltungen:
**FR-A- 2 015 942**
**FR-A- 2 484 187**
**FR-A- 2 530 113**
**GB-A- 1 513 238**

(73) Patentinhaber: **Amazonen-Werke H. Dreyer
GmbH & Co. KG
Am Amazonenwerk 9-13
W-4507 Hasbergen-Gaste(DE)**

(72) Erfinder: **Gattermann, Bernd
Eichenwall 3
W-2872 Hude i.O.(DE)**

EP 0 266 527 B1

Beschreibung

Die Erfindung betrifft eine Sämaschine gemäß des Oberbegriffes des Patentanspruches 1. Durch die FR-A-25 30 113 ist eine derartige Sämaschine bereits bekannt.

Der Erfindung liegt die Aufgabe zugrunde, die Sämaschine nach dem Gattungsbegriff in vorteilhafter Weise weiterzubilden.

Diese Aufgabe wird erfindungsgemäß durch das Kennzeichen des Patentanspruches 1 gelöst. Infolge dieser Maßnahmen wird durch die Meßeinrichtung zur Erfassung des Schartiefganges und der von dieser Meßeinrichtung übermittelten Impulse die Einstellvorrichtung derart verändert, daß der Schardruck an die jeweilige Bodenfestigkeit automatisch angepaßt wird. Hierdurch bleibt der Schartiefgang bzw. die Saatablagetiefe auch bei sich ändernden Bodenwiderständen konstant. Von Vorteil ist hierbei, daß mit äußerst geringen Kräften über die zentrale Einstellvorrichtung die Spannung der Schardruckfedern verändert werden kann. Somit kann mit geringsten Verstellkräften sehr vorteilhaft auch bei unterschiedlichen Bodenverhältnissen automatisch der Schardruck derart geändert wird, daß die gewünschte Ablagetiefe des Saatgutes in jedem Falle eingehalten wird.

In der nicht vorveröffentlichten EP-A-210 517 ist eine Sämaschine beschrieben, bei der an der zentralen Einstellvorrichtung zumindest ein den an den Säscharen angreifenden federnden Elementen entgegenwirkendes federndes Kompenstionselement angeordnet ist.

In vorteilhafter Weise ist die zentrale Einstellvorrichtung als elektrischer Kubzylinder ausgebildet, so daß sich eine äußerst schnell reagierende Verstelleinrichtung ergibt.

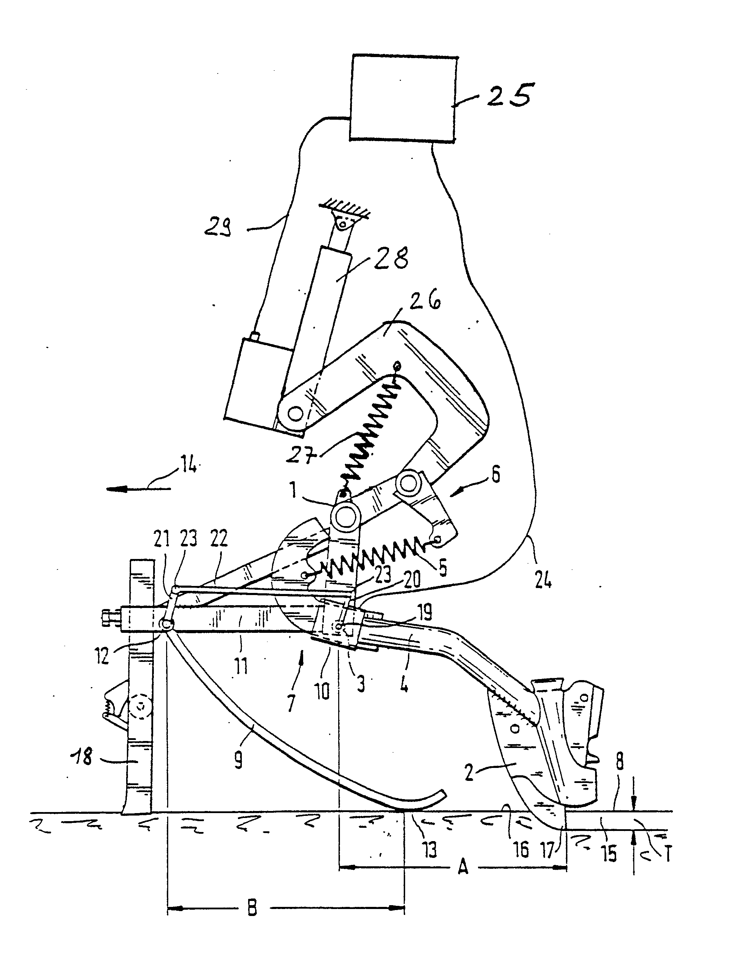

Die Erfindung wird anhand eines Ausführungsbeispieles näher erläutert. Die Zeichnung zeigt eine erfindungsgemäße Anordnung der Meßeinrichtung an eine erfindungsgemäß ausgebildete Sämaschine in Prinzipdarstellung und in der Seitenansicht.

An dem Rahmen 1 der Sämaschine sind die Säschare 2, von denen nur eines dargestellt ist, in bekannter Weise in mehreren Querreihen hintereinander und jeweils auf Lücke versetzt nebeneinander mittels der Gelenke 3 in aufrechter Ebene schwenkbar angeordnet. Der Haltearm 4 des Säschares 2 ragt über das Gelenk 3 hinaus. An dem über das Gelenk 3 hinausragenden Stück des Haltearmes 4 ist die Schardruckfeder 5 der zentralen Schardruckverstellung 6, die ebenfalls an dem Rahmen 1 der Drillmaschine angeordnet ist, befestigt.

An dem Säschar 2 ist die Meßeinrichtung 7 angeordnet, mit der die Eindringtiefe T des Säschares 2 in den Boden zu erfassen ist. Die Meßeinrichtung 7 besteht vor allem aus dem vor dem Säschar 2 angeordneten Tastelement 9, welches als Schleifkufe ausgebildet ist, und dem zwischen dem Säschar 2 und der Schleifkufe 9 angeordneten Meßinstrument 10, welches als Drehpotentiometer ausgebildet ist. Die Schleifkufe 9 ist an der Halterung 11, die an dem Rahmen 1 angeschweißt ist, mit Hilfe des Gelenkes 12 in aufrechter Ebene schwenkbar angeordnet. Das Gelenk 12 des Tastelementes 9 befindet sich somit vor dem Gelenk 3 des Säschares 2. Der auf dem Boden 8 aufliegende Teil 13 der Schleifkufe 9 befindet sich in Fahrtrichtung 14 gesehen fluchtend vor dem der Schleifkufe 9 zugeordneten Säschar 2; d.h. das Säschar 2 zieht in den Bereich die Särille 15 in den Boden, in dem die Schleifkufe 9 die Bodenoberfläche 16 abtastet. Der waagerechte Abstand A zwischen dem Drehpunkt des Säschares 2, der von dem Gelenk 3 gebildet wird, und der Scharspitze 17 des Säschares 2 ist gleich dem waagerechten Abstand B zwischen dem Drehpunkt der Schleifkufe 9, der von dem Gelenk 12 gebildet' wird, und im Auflagepunkt 13 der Schleifkufe 9 auf den Boden 8. Der Drehpotentiometer 10 ist an dem Haltearm 4 des Säschares 2 fest angeschraubt.

Vor der Schleifkufe 9 ist an der Halterung 11 der Klutenräumer 18 angeordnet. Der Klutenräumer 18 ist derart eingestellt, daß er die groben Kluten beiseite räumt. Die Unterkante des Klutenräumers 18 ragt während des Einsatzes der Sämaschine etwas in den Boden 8 hinein, um so sicher die groben Kluten zur Seite zu räumen und um gleichzeitig eine ebene Bodenoberfläche 16 zu schaffen, auf der die Schleifkufe 9 den Boden abtastet.

Die Drehachse 19 des Betätigungshebels 20 des Drehpotentiometers 10 fluchtet mit der durch das Gelenk 3 verlaufenen Schwenkachse des Säschares 2, so daß die Drehachse 19 des Betätigungshebels 20 des Drehpotentiometers 10 und die Schwenkachse des Säschares zusammenfallen. An der Schleifkufe 9 ist der Hebel 21 im Bereich des Gelenkes 12 befestigt. Die dem Gelenk 12 abgewandte Seite des Hebels 21 ist über die Stange 22 mit dem Betätigungshebel 20 mit Hilfe von Kugelgelenken 23 verbunden, so daß sich ein parallelogrammartiges Betätigungsgestänges für den Drehpotentiometer 10 ergibt. Der Drehpotentiometer 10 ist über das Kabel 24 mit der Regeleinrichtung 25 verbunden. Die Regeleinrichtung 25 weist einen Mikroprozessor auf, der die von dem Drehpotentiometer 10 übermittelten Signale, die analog des Schartiefganges C des Säschares 2 sind, verarbeitet.

Zwischen dem Rahmen 1 und dem Hebel 26 der zentralen Einstellvorrichtung der Schardruckverstellung 6 ist die Zugfeder 27 angeordnet. Diese Zugfeder 27 ist als Kompensationselement ausgebildet und derart ausgelegt, daß die Zugkraft der Zugfeder 27 ausreicht, um die gemeinsame Zugkraft der Schardruckfedern 5 zu kompensieren.

Des weiteren ist zwischen dem Rahmen der Sämaschine und dem Hebel 26 der zentralen Schardruckverstellung 6 das als elektrischer Hubzylinder ausgebildete Betätigungselement für die Verstellung der zentralen Schardruckverstellung 6 angeordnet. Der elektrische Hubzylinder 28 ist über das Kabel 29 an die Regeleinrichtung 25 angeschlossen. Aufgrund der von dem Drehpotentiometer l0 übermittelten und den Schartiefgang repräsentierenden Signale, die von dem Mikroprozessor der Regeleinrichtung 25 verarbeitet werden, erhält das als elektrischer Hubzylinder ausgebildete Betätigungselement über das Kabel 29 entsprechende Impulse, so daß entsprechend des Tiefganges T des Säschares 2 der Schardruck über die zentrale Einstellvorrichtung 6 so geändert wird, daß der gewünschte Schartiefgang T wieder erreicht wird. Aufgrund der Kompensationsfeder 27, die die Kraft der Schardruckfedern 5 kompensiert, kann das als elektrische Hubzylinder ausgebildet Betätigungselement 28 sehr klein demensioniert werden.

## Ansprüche

1. Sämaschine mit einem Rahmen (l) und daran höhenbeweglich angeordneten Säscharen (2), die zusätzlich einzeln mit dem Rahmen (l) über federnde sowie auf sie in Richtung auf den Boden wirksame Elemente verbunden sind, deren Spannung mit Hilfe einer zentralen Einstellvorrichtung veränderbar ist, wobei an der Sämaschine eine Meßeinrichtung (7) zur Erfassung des Schartiefganges (T) sowie eine mit dieser Meßeinrichtung (7) verbundene Regeleinrichtung (25), die mit der zentralen Einstellvorrichtung (6) verbunden ist, angeordnet ist, dadurch gekennzeichnet, daß an der zentralen Einstellvorrichtung (6) zumindest ein den an den Säscharen (2) angreifenden federnden Elementen (5) entgegenwirkendes federndes Kompensationselement (27) angeordnet ist.

2. Sämaschine nach Anspruch l, dadurch gekennzeichnet, daß die regeleinrichtung (25) so ausgebildet ist, daß aufgrund der von der Meßeinrichtung (7) an sie übermittelten Impulse die Einstellvorrichtung (6) derart verstellt wird, daß der gewünschte Tiefgang (T) der Säschare (2) auch bei unterschiedlchen Bodenverhältnissen konstant bleibt.

3. Sämaschine nach Anspruch l, dadurch gekennzeichnet, daß die zentrale Einstellvorrichtung (6) als elektrischer Hubzylinder (28) ausgebildet ist.

## Claims

1. Seed drill, including a frame (l) and sowing coulters (2), which are disposed thereon in a vertically displaceable manner and are additionally connected individually to the frame (l) via the intermediary of resilient members, which act on said coulters to urge such in a direction towards the ground, and the tension of which resilient members is variable by means of a central adjuster, the seed drill having disposed thereon a measuring arrangement (7) for determining the depth of penetration (T) of the coulters and a control mechanism (25), which is connected to said measuring arrangement (7) and is connected to the central adjuster (6), characterised in that at least one resilient compensating member (27), which counteracts the resilient members (5) acting on the sowing coulters (2), is disposed on the central adjuster (6).

2. Seed drill according to claim l, characterized in that the control mechanism (25) is so adapted that, on the basis of the signals which are transmitted thereto by the measuring arrangement (7), the adjuster (6) is adjusted in such a manner that the desired depth of penetration (T) of the sowing coulters (2) remains constant, even with varying soil conditions.

3. Seed drill according to claim l, characterized in that the central adjuster (6) is an electric lifting cylinder (28).

## Revendications

1. Semoir comportant un châssis (l) portant des socs de semoir (2) montés mobiles en hauteur, qui sont en outre reliés séparément au châssis (l) par des éléments élastiques agissant sur les socs en direction du sol, élément élastique dont la tension peut être changée à l'aide d'une installation centrale de réglage, une installation de mesure (7) pour détecter la profondeur de travail (T) et une installation de régulation (27) reliée à cette installation de mesure (7) étant prévue sur le semoir, cette installation de régulation n'étant reliée à l'installation centrale de réglage (6), semoir caractérisé en ce que l'installation centrale de réglage (6) comporte au moins un élément de compensation (27) à effet élastique, agissant contre les éléments élastiques (5) appliqués aux socs de semoir (2).

2. Semoir selon la revendication I, caractérisé en ce que l'installation de régulation (25) est conçue pour que les impulsions transmises par cette installation de mesure (7) règlent le dispositif de réglage (6) pour que la profondeur de travail de consigne (T) des socs de semoir (2) reste constante même pour des conditions différentes existant dans le sol.

3. Semoir selon la revendication I, caractérisé en ce que l'installation centrale de réglage (6) est un vérin électrique (28).